**Europäisches Patentamt**

**European Patent Office**

**Office européen des brevets**

(19)

(11) Numéro de publication : **0 407 239 B1**

## (12) FASCICULE DE BREVET EUROPEEN

(45) Date de publication du fascicule du brevet :
30.12.92 Bulletin 92/53

(51) Int. Cl.⁵ : **F16L 3/22**

(21) Numéro de dépôt : **90401626.8**

(22) Date de dépôt : **13.06.90**

(54) **Dispositif de fixation d'un ensemble de tubes ou analogues sur une paroi.**

(30) Priorité : **06.07.89 FR 8909089**

(43) Date de publication de la demande :
**09.01.91 Bulletin 91/02**

(45) Mention de la délivrance du brevet :
**30.12.92 Bulletin 92/53**

(84) Etats contractants désignés :
**DE GB IT**

(56) Documents cités :
**EP-A- 0 230 553**
**DE-A- 3 236 981**
**DE-B- 1 261 363**
**DE-B- 2 306 969**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Garrido de la Hoz, Fernand**
**49, Avenue des Martyrs de Chateaubriand**
**F-77290 Mitry le neuf (FR)**

(74) Mandataire : **Robert, Jean-François**
**PSA Peugeot Citroen Centre Technique**
**Citroen CV 2 route de Gizy**
**F-78140 Velizy Villacoublay (FR)**

**EP 0 407 239 B1**

## Description

L'invention a pour objet un dispositif pour la fixation de tubes ou objets analogues sur une paroi. Elle s'applique notamment à la fixation d'un faisceau de tubes sous le plancher d'un véhicule, mais peut également s'appliquer à la fixation d'autres éléments allongés tels que gaines, câbles électriques, etc... sur une paroi quelconque.

Dans le domaine automobile, il est courant, pour des raisons de commodité, de faire passer sous le plancher d'un véhicule les canalisations d'essence, de liquide de frein, etc... Ces canalisations sont réunies en faisceau et maintenues de place en place par des dispositifs de fixation. Ces derniers se composent le plus souvent d'une seule pièce ou agrafe fixée au plancher et présentant des logements pour les tubes. Ceux-ci sont introduits par la face inférieure de l'agrafe en écartant deux pattes élastiques, ces dernières reprenant leur position initiale une fois le tube dans son logement.

Ces dispositifs présentent le défaut d'avoir un encombrement relativement important à 'cause de la présence des pattes élastiques qui sont généralement disposées en forme de V renversé d'axe vertical. De plus, au cours du temps, ces pattes peuvent subir des déformations ou voir leurs caractéristiques mécaniques altérées, et les tubes risquent alors de quitter leurs logements.

L'invention a pour but de remédier à ces inconvénients en proposant un dispositif de fixation d'un ensemble de tubes où analogues sur une paroi qui soit peu encombrant, facile à mettre en place et assure un maintien efficace des tubes.

Le document DE-A-3236981 décrit un dispositif comportant une pièce fixée sous le plancher du véhicule et présentant sur sa face inférieure des logements dans lesquels les tubes sont introduits à force. Ces derniers sont protégés contre d'éventuelles projections par une deuxième pièce clippée sur la première.

Le dispositif objet de l'invention est du type comportant:
- une première pièce,
- des moyens de fixation de cette première pièce sur la paroi,
- une deuxième pièce, et
- des moyens de fixation de la deuxième pièce sur la première,

les tubes étant maintenus en appui sur les deux pièces lorsqu'elles sont fixées l'une à l'autre.

Le document DE-B-1261363 décrit un dispositif de ce type.

Le fait qu'un tel dispositif soit réalisé en deux pièces séparées qui enserrent les tubes permet de donner à chacune d'elles des dimensions réduites, et donc d'obtenir un encombrement réduit de l'ensemble.

Selon la principale caractéristique de l'invention, les moyens de fixation de la deuxième pièce sur la première comprennent au moins une patte flexible prévue sur l'une des deux pièces et apte à pénétrer dans un logement prévu sur l'autre sous l'effet de l'introduction d'un pion.

Selon d'autres aspects de l'invention:
- ladite patte se trouve au niveau d'une aile d'une partie en forme de T de la pièce qui la porte;
- ledit logement se présente sous la forme d'une fenêtre ménagée dans une aile d'une partie en forme de U de la pièce qui le porte;
- ladite patte est de forme allongée et a une extrémité libre;
- ladite patte est de forme allongée et a ses deux extrémités fixées à la pièce qui la porte;
- ladite patte est sensiblement en forme de L et orientée de sorte que ce soit le pied du L qui pénètre dans ledit logement;
- ladite patte présente, sur la partie correspondant à la jambe du L, une surface inclinée en direction du pion;
- l'une des deux pièces présente, à sa périphérie, au moins un becquet apte à reposer sur une surface correspondante de l'autre pièce;
- le matériau constitutif de la pièce portant les pattes est plus souple que celui de l'autre pièce;
- les moyens de fixation de la deuxième pièce sur la première assurent également la fixation de la première pièce sur la paroi;
- l'agencement du dispositif est tel que l'introduction du pion destiné à écarter ladite patte flexible assure également la fixation de la première pièce sur la paroi;
- un seul et même pion assure, lors de sa mise en place, l'écartement de ladite patte flexible et la mise en position de verrouillage d'un rivet destiné à fixer la première pièce sur la paroi.

L'invention apparaîtra mieux à la lecture de la description qui va suivre, donnée à titre d'exemple non limitatif, en référence aux dessins annexés dans lesquels:
- la figure 1 est une vue schématique en coupe verticale transversale d'un faisceau de tubes montés sous le plancher d'un véhicule grâce au dispositif objet de l'invention;
- la figure 2 est une vue schématique en perspective des deux pièces qui composent le dispositif objet de l'invention;
- la figure 3 est une vue de dessous en perspective, à échelle agrandie, d'une partie de l'une des deux pièces sur laquelle se trouvent les pattes flexibles et montrant deux modes de réalisation possibles de ces dernières;
- les figures 4a et 4b sont des vues schématiques montrant les pattes flexibles avant et après introduction du pion, respectivement, selon un premier mode de réalisation;

- les figures 5a et 5b sont des vues semblables aux figures 4a et 4b dans un deuxième mode de réalisation; et

- la figure 6 est une vue schématique en perspective d'un troisième mode de réalisation de la patte flexible.

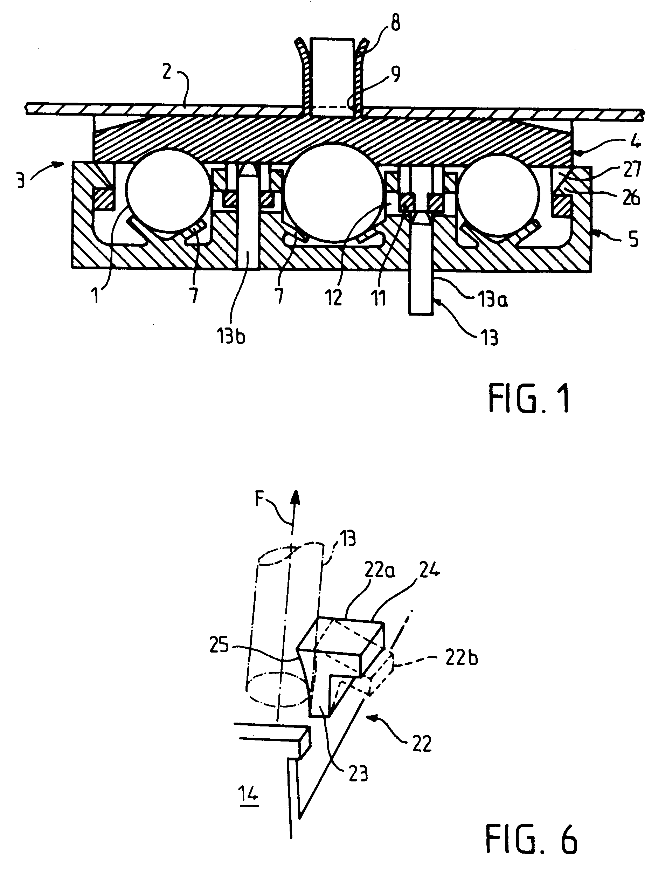

Sur la vue en coupe de la figure 1, on voit un ensemble de tubes 1 fixés sous le plancher 2 d'un véhicule grâce au dispositif de l'invention, qui porte la référence générale 3. Celui-ci se compose d'une première pièce 4 fixée au plancher 2 et d'une deuxième pièce 5 fixée à la première, les tubes 1 étant maintenus entre ces deux pièces.

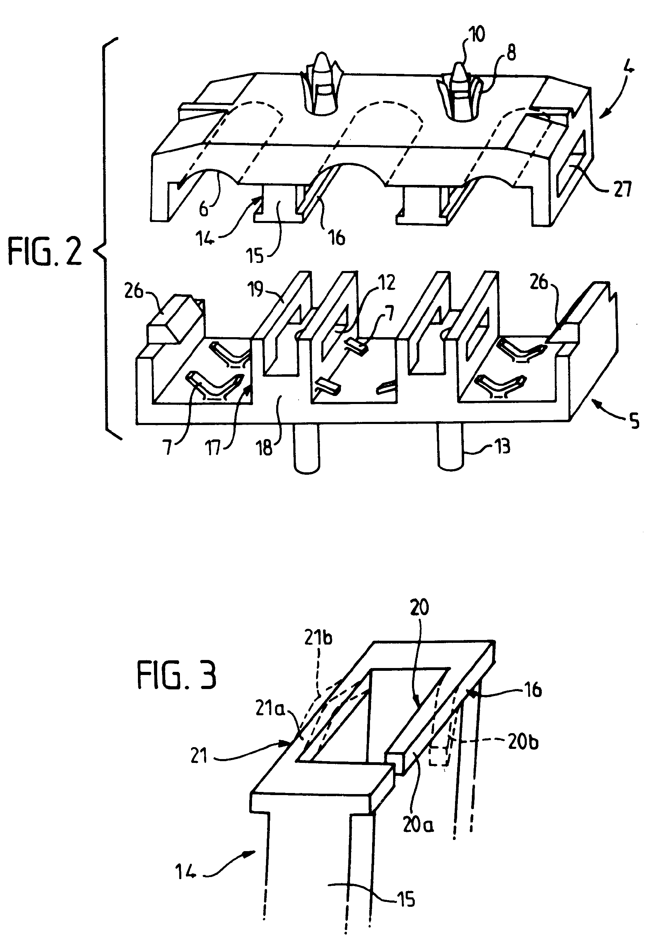

Dans l'exemple représenté aux figures 1 et 2, les tubes sont en appui d'une part sur des surfaces cylindriques 6 prévues sur la pièce 4 et d'autre part sur des pattes 7 prévues sur la pièce 5.

La fixation de la pièce 4 sur le plancher 2 peut se faire par tout moyen. On peut notamment utiliser un rivet à expansion: des ailes 8 de la pièce 4 sont introduites dans un trou 9 du plancher 2, puis écartées par introduction d'un pion 10.

Pour fixer la pièce 5 sur la pièce 4, on a prévu, sur cette dernière, des pattes flexibles 11 aptes à pénétrer dans des logements 12 de la pièce 5 sous l'effet de l'introduction de pions tels que 13. Ces derniers sont introduits à travers des passages prévus à cet effet ménagés dans la pièce 5. La disposition des différents éléments est telle qu'en l'absence des pions 13, les pièces 4 et 5 peuvent coulisser l'une par rapport à l'autre, mais ce mouvement est interdit une fois les pions 13 en place, à cause du blocage des pattes 11 dans les logements 12.

Sur la partie droite de la figure 1, on a représenté un pion 13a avant sa mise en place: les pattes 11 sont en dehors des logements 12, et les pièces 4 et 5 peuvent coulisser l'une par rapport à l'autre suivant une direction perpendiculaire à la paroi 2. Sur la partie gauche de la figure 1, le pion 13b est en place: il écarte les pattes 11 qui se trouvent alors dans les logements 12, ce qui interdit le mouvement relatif des pièces 4 et 5.

La forme et l'emplacement des pattes 11 et des logements 12 apparaissent mieux aux figures 2 et 3. Dans le mode de réalisation correspondant, on a prévu, sur la pièce 4, des parties 14 en forme de T disposées entre les surfaces 6 recevant les tubes. L'âme 15 du T s'étend à partir du corps de la pièce 4 et les ailes 16 de ce T s'étendent perpendiculairement à l'âme 15, à son extrémité opposée au corps de la pièce 4. Au moins la partie du T 14 située au voisinage des ailes 16 est creuse afin que ces dernières constituent des pattes flexibles, comme cela apparaît mieux sur la figure 3.

Sur la pièce 5, on a prévu, entre les espaces destinés à recevoir les tubes et contenant les pattes 7, des parties en forme de U 17. L'âme 18 du U est située du côté du corps de la pièce 5 et les ailes 19 du U s'étendent à partir de l'âme 18 dans une direction sensiblement perpendiculaire au corps de la pièce 5. Dans les ailes 19 sont ménagées des fenêtres qui constituent les logements 12 précités.

La largeur du T 14 au niveau des ailes 16 est égale ou légèrement inférieure à la distance entre les ailes 19 des parties en U 17. Ainsi, les deux pièces 4 et 5 peuvent être amenées en contact l'une avec l'autre, les ailes 16 des parties 14 pénétrant entre les ailes 19 des parties 17 jusqu'au niveau des fenêtres 12. L'introduction des pions 13 a pour effet d'écarter les ailes 16 qui pénètrent dans les fenêtres 12, bloquant ainsi les pièces 4 et 5 l'une sur l'autre.

La vue de dessous de la figure 3 illustre deux modes de réalisation possibles pour les ailes 16 des pièces 14. Sur la partie droite de la figure, la patte 20 est de forme allongée et a une extrémité liée à la partie 14 tandis que son autre extrémité est libre. Sur la partie gauche de la figure, la patte 21 a ses deux extrémités liées à la pièce 14. Au repos, les pattes 20 et 21 occupent les positions 20a et 21a représentées en traits pleins tandis qu'après introduction des pions 13, elles occupent les positions 20b et 21b représentées en pointillés.

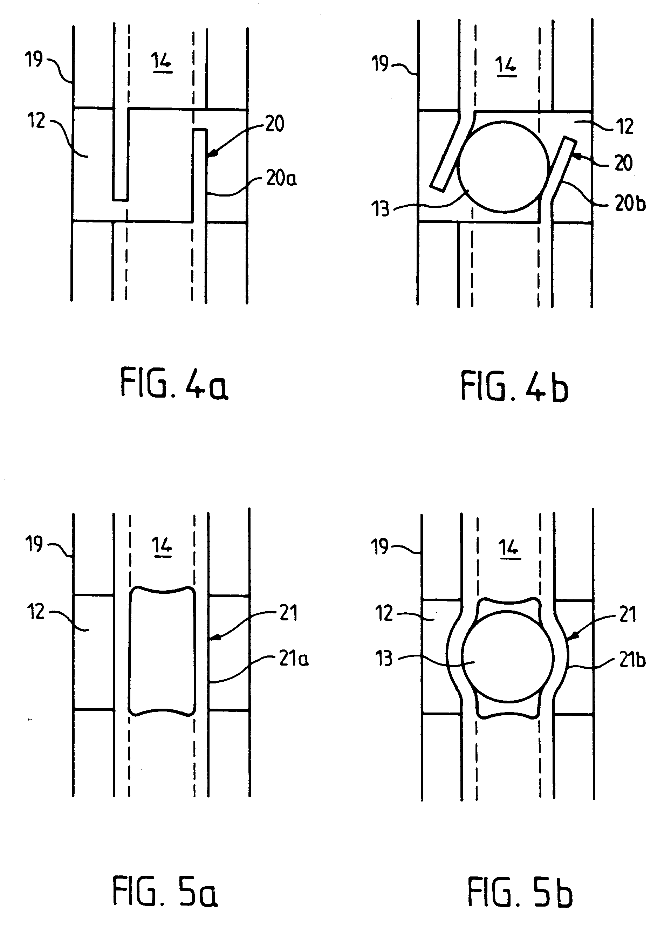

Ces positions sont également illustrées aux figures 4a à 5b. Les figures 4a et 4b correspondent au cas de la patte 20 qui a une extrémité fixe et une extrémité libre tandis que les figures 5a et 5b correspondent au cas de la patte 21 qui a ses deux extrémités fixes. Les figures 4a et 5a illustrent la position en l'absence du pion 13 et les figures 4b et 5b la position après introduction du pion.

Il est à noter que, dans le mode de réalisation des figures 4a à 5b, les dimensions des pions 13 sont telles qu'une fois en place, ils ne sont en contact qu'avec les pattes 20 ou 21. On ne sortirait cependant pas du cadre de l'invention en leur donnant des dimensions telles qu'ils soient en contact avec d'autres parties des pièces 14 en forme de T.

La figure 6, dont l'orientation est la même que celle de la figure 3, montre une troisième forme possible pour les pattes flexibles. Dans ce cas, la patte 22 a sensiblement la forme d'un L dont la jambe 23 s'étend à partir de la pièce qui la supporte (par exemple une partie en forme de T 14). Le pied 24 du L s'étend perpendiculairement à la jambe 23, à son extrémité opposée à la pièce 14. La position de repos 22a est représentée en traits pleins tandis que la position 22b après introduction du pion 13 est en pointillés.

Dans l'exemple illustré à la figure 6, la jambe 23 du L présente une surface inclinée 25 qui vient en contact avec le pion 13, représenté schématiquement en traits mixtes, lors de l'introduction de celui-ci suivant la flèche F.

Dans le mode de réalisation de la figure 6, la jambe du L s'étend parallèlement à l'axe du pion 13. On pourrait cependant, sans sortir du cadre de l'invention, imaginer une variante dans laquelle la jambe du L s'étendrait perpendiculairement à l'axe du pion 13, un peu comme si la patte 20 de la figure 3 avait, à son extrémité libre, un pied apte à s'engager dans un logement 12.

On voit encore aux figures 1 et 2 que la pièce 5 peut être équipée à ses extrémités de becquets 26 qui peuvent pénétrer dans les fenêtres 27 de la pièce 4 et reposer sur une surface antagoniste de celle-ci. Cette disposition permet un maintien provisoire des pièces 4 et 5 l'une sur l'autre. On peut ainsi transporter le faisceau de tubes et/ou effectuer certaines opérations avant de procéder à la fixation définitive.

Il y a généralement plusieurs dispositifs comprenant une pièce 4 et une pièce 5 repartis le long d'un faisceau de tubes. Une opération de montage peut s'effectuer de plusieurs manières.

On peut par exemple préparer d'abord l'ensemble du faisceau en dehors du véhicule, c'est-à-dire placer les tubes entre les pièces 4 et 5 et introduire les pions 13 pour fixer les pièces 5 sur les pièces 4. L'ensemble est ensuite amené sous le plancher du véhicule et on fixe les pièces 4 à celui-ci.

On peut également fixer d'abord les pièces 4 à la paroi 2 et amener ensuite les tubes et les pièces 5 que l'on fixe aux pièces 4. Si nécessaire, on peut encore mettre d'abord en place les pièces 4 correspondant aux deux extrémités du faisceau et fixer provisoirement les tubes en ne maintenant les pièces 5 sur les pièces 4 qu'avec les becquets 26. On peut alors procéder à certaines opérations telles que le raccordement des tubes (qui peuvent nécessiter un certain déplacement de ceux-ci) avant de mettre en place les autres dispositifs de fixation et d'effectuer la fixation définitive des tubes.

Les pièces 4 et 5 sont avantageusement en matière plastique, ce qui autorise une certaine souplesse, mais il est préférable que le matériau constitutif de la pièce portant les pattes soit plus souple que celui de l'autre pièce.

Pour faciliter la mise en place du dispositif, on peut agencer celui-ci de sorte que l'introduction de l'un des pions 13 assure également la fixation de la pièce 4 sur la paroi 2. Par exemple, le passage du pion 13 peut être prévu à un endroit tel que, lors de sa mise en place, le pion 13 pousse le pion 10 destiné à écarter les ailes 8. On peut encore prévoir que ce soit un seul et même pion qui assure l'écartement de certaines pattes 11 et l'écartement des ailes 8.

Le dispositif objet de l'invention présente des avantages particulièrement intéressants dont le principal est son faible encombrement. Ceci est dû au fait qu'il est réalisé en deux parties: chacune des pièces 4 et 5 peut avoir la forme générale d'un demi-boîtier de faible épaisseur. L'encombrement total peut donc être plus faible qu'avec les dispositifs de l'art antérieur mentionnés au début de la présente description car les pattes de retenue disposées en V occupent un espace plus important que la pièce 5. De plus, les tubes ne risquent pas de tomber ou de sortir de leurs logements car la pièce 5 constitue un "chapeau" qui les retient: dans les dispositifs de l'art antérieur, il est possible d'ajouter un chapeau pour empêcher les tubes de tomber, mais celui-ci augmente encore la hauteur totale du dispositif. Enfin, si le dispositif objet de l'invention est cassé ou détérioré, il peut être changé sans enlever les tubes de la paroi.

**Revendications**

1. Dispositif de fixation d'un ensemble de tubes (1) sur une paroi (2), comprenant:
   - une première pièce (4);
   - des moyens de fixation de cette première pièce (4) sur la paroi (2);
   - une deuxième pièce (5); et
   - des moyens de fixation de la deuxième pièce (5) sur la première (4),
   les tubes (1) étant maintenus en appui sur les deux pièces (4,5) lorsqu'elles sont fixées l'une à l'autre, caractérisé en ce que les moyens de fixation de la deuxième pièce (5) sur la première (4) comprennent au moins une patte flexible (11,16,20-22) prévue sur l'une (4) des deux pièces et apte à pénétrer dans un logement (12) prévu sur l'autre (5) sous l'effet de l'introduction d'un pion (13).

2. Dispositif selon la revendication 1, caractérisé en ce que ladite patte (11) se trouve au niveau d'une aile (16) d'une partie en forme de T (14) de la pièce qui la porte.

3. Dispositif selon l'une quelconque des revendications 1 et 2, caractérisé en ce que ledit logement (12) se présente sous la forme d'une fenêtre ménagée dans une aile (19) d'une partie en forme de U (17) de la pièce qui le porte.

4. Dispositif selon l'une quelconque des revendications 1 à 3, caractérisé en ce que ladite patte (20) est de forme allongée et a une extrémité libre.

5. Dispositif selon l'une quelconque des revendications 1 à 3, caractérisé en ce que ladite patte (21) est de forme allongée et a ses deux extrémités fixées à la pièce qui la porte.

6. Dispositif selon l'une quelconque des revendications 1 à 3, caractérisé en ce que ladite patte (22) est sensiblement en forme de L et orientée de sorte que ce soit le pied du L qui pénètre dans ledit logement (12).

7. Dispositif selon la revendication 6, caractérisé en ce que ladite patte (22) présente, sur la partie (23) correspondant à la jambe du L, une surface (25) inclinée en direction du pion (13).

8. Dispositif selon l'une quelconque des revendications 1 à 5, caractérisé en ce que l'une des deux pièces présente, à sa périphérie, au moins un becquet (26) apte à reposer sur une surface correspondante de l'autre pièce.

9. Dispositif selon l'une quelconque des revendications 1 à 6, caractérisé en ce que le matériau constitutif de la pièce portant les pattes (11,16,20-22) est plus souple que celui de l'autre pièce.

10. Dispositif selon l'une quelconque des revendications 1 à 9, caractérisé en ce que les moyens de fixation de la deuxième pièce (5) sur la première (4) assurent également la fixation de la première (4) sur la paroi (2).

11. Dispositif selon la revendication 10, caractérisé en ce que son agencement est tel que l'introduction du pion (13) destiné à écarter ladite patte flexible (11) assure simultanément la fixation de la première pièce (4) sur la paroi (2).

12. Dispositif selon la revendication 11, caractérisé en ce qu'un seul et même pion (13) assure, lors de sa mise en place, l'écartement de ladite patte flexible (11) et la mise en position de verrouillage d'un rivet destiné à fixer la première pièce sur la paroi (2).

**Patentansprüche**

1. Vorrichtung zum Befestigen einer Anordnung von Rohren (1) an einer Wand (2), bestehend aus:
   - einem ersten Teil (4);
   - Mitteln zur Befestigung dieses ersten Teils (4) an der Wand (2);
   - einem zweiten Teil (5); und
   - Mitteln zur Befestigung des zweiten Teils (5) auf dem ersten (4),
   wobei die Rohre (1) durch die beiden Teile (4, 5) gestützt gehalten werden, wenn diese aneinander befestigt sind, dadurch gekennzeichnet, daß die Mittel zur Befestigung des zweiten Teils (5) auf dem ersten (4) wenigstens aus einer Zunge (11, 16, 20 - 22) bestehen, die an einem (4) der beiden Teile vorgesehen ist und geeignet ist, unter Einwirkung eines Stifts (13), der eingeführt wird, in eine Aufnahme (12) einzudringen, die an dem anderen Teil (5) vorgesehen ist.

2. Vorrichtung nach Anspruch 1, dadurch gekennzeichnet, daß die genannte Zunge (11) sich in Höhe eines Flanschs (16) eines T-förmigen Abschnitts (14) des sie tragenden Teils befindet.

3. Vorrichtung nach einem der Ansprüche 1 und 2, dadurch gekennzeichnet, daß die genannte Aufnahme (12) sich als ein Fenster darstellt, das in einem Flügel (19) eines U-förmigen Abschnitts (17) des Teils, das ihn aufweist, ausgeführt ist;

4. Vorrichtung nach einem der Ansprüche 1 bis 3, dadurch gekennzeichnet, daß die genannte Zunge (20) länglich ist und ein freies Ende hat.

5. Vorrichtung nach einem der Ansprüche 1 bis 3, dadurch gekennzeichnet, daß die genannte Zunge (21) länglich ist und mit ihren beiden Enden an dem Teil, das sie trägt, befestigt ist.

6. Vorrichtung nach einem der Ansprüche 1 bis 3, dadurch gekennzeichnet, daß die genannte Zunge (22) genau L-förmig und so gedreht ist, daß der Fuß des L in genannte Aufnahme (12) eintritt.

7. Vorrichtung nach Anspruch 6, dadurch gekennzeichnet, daß die genannte Zunge (22) an dem Abschnitt (23), der dem Schenkel des L entspricht, eine Oberfläche (25) aufweist, die in Richtung des Stifts (13) geneigt ist.

8. Vorrichtung nach einem der Ansprüche 1 bis 5, dadurch gekennzeichnet, daß das eine der beiden Teile an seiner Peripherie wenigstens eine Nase (26) aufweist, die geeignet ist, auf einer entsprechenden Fläche des anderen Teils aufzuliegen.

9. Vorrichtung nach einem der Ansprüche 1 bis 6, dadurch gekennzeichnet, daß das Material, aus dem das Teil mit den Zungen (11, 16, 20 - 22) besteht, biegsamer ist als das des anderen Teils.

10. Vorrichtung nach einem der Ansprüche 1 bis 9, dadurch gekennzeichnet, daß die Mittel zur Befestigung des zweiten Teils (5) auf dem ersten (4) auch die Befestigung des ersten Teils (4) an der Wand (2) gewährleisten.

11. Vorrichtung nach Anspruch 10, dadurch gekennzeichnet, daß ihr Aufbau dergestalt beschaffen ist, daß das Einführen des Stifts (13) zum Spreizen der genannten biegsamen Zunge (11) gleichzeitig die Befestigung des ersten Teils (4) an der Wand (2) gewährleistet.

12. Vorrichtung nach Anspruch 11, dadurch gekennzeichnet, daß ein und derselbe Stift (13) bei seiner Anbringung das Spreizen der genannten biegsamen Zunge (11) und das In-Verriegelungsstellung-Bringen eines Niets zur Befestigung des ersten Teils an der Wand (2) gewährleistet.

## Claims

1. A device for fastening an assembly of tubes (1) to a wall (2),comprising:
   - a first part (4);
   - means for fastening this first part (4) to the wall (2);
   - a second part (5); and
   - means for fastening the second part (5) to the first (4), the tubes (1) being kept resting against the two parts (4, 5) when they are fastened to one another, characterised in that the means for fastening the second part (5) to the first one (4) comprise at least one flexible lug (11, 16, 20-22) provided on one (4) of the two parts and suited to penetrating inside a housing (12) provided on the other (5) under the effect of the insertion of a dowel pin (13).

2. A device according to Claim 1, characterised in that said lug (11) is located in the region of a wing (16) of a T-shaped portion (14) of the part bearing it.

3. A device according to any one of Claims 1 and 2, characterised in that said housing (12) is in the form of a window provided in a wing (19) of a U-shaped portion (17) of the part bearing it.

4. A device according to any one of Claims 1 to 3, characterised in that said lug (20) is elongated in form and has a free end.

5. A device according to any one of Claims 1 to 3, characterised in that said lug (21) is elongated in form and has both ends fixed to the part bearing it.

6. A device according to any one of Claims 1 to 3, characterised in that said lug (22) is substantially L-shaped and oriented such that it is the foot of the L which penetrates into said housing (12).

7. A device according to Claim 6, characterised in that, on the portion (23) corresponding to the leg of the L, said lug (22) has a surface (25) inclined in the direction of the dowel pin (13).

8. A device according to any one of Claims 1 to 5, characterised in that one of the two parts has, on its periphery, at least one spike (26) suited to resting on a corresponding surface of the other part.

9. A device according to any one of Claims 1 to 6, characterised in that the material constituting the part bearing the lugs (11, 16, 20-22) is more flexible than that of the other part.

10. A device according to any one of Claims 1 to 9, characterised in that the means for fastening the second part (5) to the first one (4) also ensure the fastening of the first one (4) to the wall (2).

11. A device according to Claim 10, characterised in that its arrangement is such that the insertion of the dowel pin (13) intended to distance said flexible tab (11) simultaneously ensures the fastening of the first part (4) to the wall (2).

12. A device according to Claim 11, characterised in that one and the same dowel pin(13),on being positioned,ensures the distancing of said flexible lug (11) and the locking into position of a rivet intended to fasten the first part to the wall (2).

FIG. 1

FIG. 6

FIG. 2

FIG. 3

FIG. 4a

FIG. 4b

FIG. 5a

FIG. 5b